# EUROPÄISCHE PATENTSCHRIFT

(11) **EP 3 847 041 B1**
(45) Veröffentlichungstag und Bekanntmachung des Hinweises auf die Patenterteilung: **19.10.2022**
(21) Anmeldenummer: 19761802.8
(22) Anmeldetag: 27.08.2019
(51) Int. Cl.: B60B 37/06, B60B 27/06, B60B 17/00

(54) **VORRICHTUNG SOWIE EINE RADSATZWELLE FÜR SCHIENENFAHRZEUGE**
DEVICE AND AN AXLE FOR RAIL VEHICLES
DISPOSITIF ET ARBRE D'ESSIEU POUR VÉHICULES FERROVIAIRES

(30) Priorität: 05.09.2018 DE 202018105052 U
(43) Veröffentlichungstag der Anmeldung: 14.07.2021
(73) Patentinhaber: Thoni, Lothar, 9108 Jakobsbad (CH)
(72) Erfinder: Thoni, Lothar, 9108 Jakobsbad (CH)
(74) Vertreter: Patentanwälte Dr. Keller, Schwertfeger Partnerschaft mbB
(86) Internationale Anmeldenummer: PCT/EP2019/072787
(87) Internationale Veröffentlichungsnummer: WO 2020/048820

(56) Entgegenhaltungen:
- EP-A1- 3 094 499
- DE-C- 658 358

## Beschreibung

### Technisches Gebiet:

Die vorliegende Erfindung betrifft eine Vorrichtung sowie eine Radsatzwelle für Schienenfahrzeuge.

### Stand der Technik:

Schienenfahrzeuge sind spurgeführt. Das Laufwerk des Schienenfahrzeugs übernimmt die Führung der Räder des Fahrzeugs auf den Schienen, die Übertragung der Last sowie deren Federung. Zusätzlich übernimmt das Laufwerk bei den angetriebenen Fahrzeugen auch die Übertragung der Antriebskräfte und bei allen Fahrzeugen die Übertragung der Bremskräfte. Im Laufwerk stellt der Radsatz die Verbindung zum Gleis her.

Ein Radsatz besteht üblicherweise aus den Radsatzlagern und der Radsatzwelle mit zwei Rädern. Die Radsatzlager dienen der Lagerung des Radsatzes am Drehgestell oder Rahmen eines Schienenfahrzeugs. Konstruktiv werden üblicherweise die Radsatzlager als Gleitlager oder als Wälzlager ausgeführt. Die Radsatzwelle verbindet die beiden Räder starr miteinander. Häufig sind auf der Radsatzwelle auch eine oder mehrere Bremsscheiben oder Antriebszahnräder montiert. Auf der Radsatzwelle eines Schienenfahrzeugs lastet das Gewicht des Fahrzeugs. Die Radsatzwelle wird dabei auf Biegung und Torsion beansprucht. Die Räder sind üblicherweise als Scheibenräder ausgeführt, wobei zentral eine Aussparung, die Radsatznabe, angeordnet ist. Bei der Herstellung eines Radsatzes wird die Radsatzwelle mit Hilfe einer Radsatzpresse unter hohem Druck in die Nabenbohrung gedrückt. Radsatzwelle und Rad sind dann vereint, bilden also eine starr miteinander verbundene Einheit.

Die herkömmlichen Radsätze sind aus einem Stück gefertigt und haben den Nachteil, dass aufgrund der formschlüssigen starren Verbindung zwischen Rad und Radsatzwelle beim Belasten des Rades Spannungen zwischen den Elementen aufgebaut werden. Diese Spannungen können dann beispielsweise zu Rissbildungen in der Radsatzwelle führen. Um einen Riss in der Radsatzwelle frühzeitig zu erkennen, wird üblicherweise alle 250.000 km eine Wartung des Radsatzes durchgeführt. Solche Wartungen sind allerdings kostenintensiv und führen zu Standzeiten der Schienenfahrzeuge. Eine Radsatzwelle, die seltener gewartet werden muss, wäre daher wünschenswert.

Die DE 39 31 912 A1 betrifft eine Einzelradlagerung eines Triebrades an Schienenfahrzeugen mit einem auf der Außenseite des Triebrades befindlichen Getriebegehäuse. Im Inneren des Getriebegehäuses ist ein Achsstummel angeformt, der mit seinem freien Ende durch eine Gehäuseöffnung nach außen vorsteht. Auf dem freien Ende des Achsstummels ist eine mit dem Triebrad fest verbundene, in das Gehäuse ragende Büchse mittels Wälzlager gelagert.

Die DE 569 368 A betrifft eine Wälzlagerung von Achsen und Wellen, vorzugsweise für Achslagerungen von Schienenfahrzeugen. Die Wälzlager sind mittels Spannhülsen in bekannter Weise auf einem Achsschenkel durch eine Achsmutter befestigt.

Die AT 113 383 B betrifft eine Achsbüchse mit zwei oder mehreren Rollenlagern. Zu jedem Rollenlager ist eine konische Spannhülse zur Befestigung auf einem Achsschenkel - vorzugsweise einem Achsschenkel eines Schienenfahrzeugs - vorgesehen.

Die CH 296 879 A betrifft ein Achslager mit Achse. In einem Achszapfenkasten ist ein Lagergehäuse angeordnet. Ferner ist ein Zapfen der Achse vorgesehen, der in das Lagergehäuse hineinragt und axial voneinander distanziert einen inneren und einen äußeren Zapfenteil aufweist. Die beiden Zapfenabschnitte sind von verschiedenem Durchmesser, wobei der äußere Zapfenteil einen kleineren Durchmesser aufweist als der innere Zapfenteil.

Die DE 658 358 C beschreibt ein sich entlang einer Längsrichtung erstreckendes, überwiegend hohles Achsrohr, das in einem ersten Radflansch endet. Der dort beschriebene Leichtradsatz umfasst eine sich entgegengesetzt der Längsrichtung erstreckende Radhalterung mit einem Radlager und einem zweiten Radflansch, wobei der zweite Radflansch, der erste Radflansch und ein dazwischen angeordnetes Rad mit einer Radnabe über eine Flanschverbindung miteinander verbunden sind.

Die EP 3 094 499 A betrifft eine Radsatzwelle für den Einsatz bei Schienenfahrzeugen, die wenigstens einen Wellenkörper aufweist, der sich im Wesentlichen entlang einer Längsachse erstreckt, wobei der Wellenkörper wenigstens einen ersten Lastkopplungsabschnitt aufweist, der zum Einleiten und/oder Ausleiten einer Kraft und/oder eines Drehmoments in ein bzw. aus einem Funktionsbauteil dient. Der Wellenkörper besteht zumindest teilweise aus wenigstens einem aushärtbaren ersten Werkstoff, in welchem wenigstens teilweise Fasern aus einem im Wesentlichen nichtmetallischen zweiten Werkstoff eingebettet sind.

### Darstellung der Erfindung:

Demnach ist es Aufgabe der vorliegenden Erfindung, eine Vorrichtung und eine Radsatzwelle für Schienenfahrzeuge bereitzustellen, um die Lastübertragung im Radsatz und dessen Sicherheit besser zu gestalten.

Die Aufgabe wird gelöst durch eine Vorrichtung für Schienenfahrzeuge mit den Merkmalen des Anspruchs 1 und eine Radsatzwelle für Schienenfahrzeuge mit den Merkmalen des Anspruchs 12.

Bevorzugte Ausführungsvarianten finden sich in den Unteransprüchen wieder.

Die erfindungsgemäße Vorrichtung für Schienenfahrzeuge umfasst zunächst ein sich entlang einer Längsrichtung erstreckendes, zumindest abschnittsweise hohles Achsrohr, das in einem ersten Radflansch endet. Ferner umfasst die Vorrichtung eine sich entgegengesetzt der Längsrichtung erstreckende Radhalterung, umfassend ein Radlager, einen zweiten Radflansch und einen Dorn als Konus. Der zweite Radflansch, der erste Radflansch und ein dazwischen angeordnetes

Rad mit einer Radnabe sind über eine Flanschverbindung miteinander verbunden. Außerdem sieht die Vorrichtung vor, dass sich der Dorn der Radhalterung als Konus formschlüssig entgegengesetzt der Längsrichtung durch die Radnabe des Rades in einen Innenraum des Achsrohrs erstreckt. Zumindest im Inneren des Dorns verläuft eine Mittelachse, die entgegengesetzt der Längsrichtung zusammen mit dem Dorn in einem im Achsrohr angeordneten Befestigungselement endet und mit einen Bolzen verbunden ist. Der Bolzen verfügt vorzugsweise über eine Feder-Unterlegscheibe, welche die Längenausdehnungsdifferenz der verschiedenen Materialien, verursacht durch verschiedene Wärmeausdehnungskoeffizienten, ausgleicht.

Das Besondere der erfindungsgemäßen Vorrichtung ist ihr mehrteiliger Aufbau. Das Rad ist wie bei herkömmlichen Vorrichtungen auf einer Achse, nämlich der Mittelachse, gelagert. Erfindungsgemäß wird das Rad über einen Dorn, der die Mittelachse umgibt und formschlüssig durch die Nabe des Rades geführt ist, fest mit der Mittelachse verbunden, die wiederum über ein rotationssymmetrisches Befestigungselement aus Stahl mit dem Achsrohr fest verbunden ist. Außerdem wird das Rad zwischen zwei Flanschen, nämlich dem ersten Radflansch des Achsrohrs und dem zweiten Radflansch des Achslagers gehalten, die mit dem Rad über eine feste Flanschverbindung verbunden sind. Dieser mehrteilige Aufbau resultiert in einer starren Verbindung von Achsrohr und Rad. Jedoch können im Gegensatz zu bekannten Vorrichtungen aufgrund des mehrteiligen Aufbaus der Vorrichtung die verschiedenen Komponenten der Vorrichtung unter Last effizienter miteinander zusammenwirken. Dadurch wird das Aufkommen von Spannungen innerhalb der Vorrichtung im Gegensatz zu bekannten Vorrichtungen deutlich reduziert. Damit ist die Wahrscheinlichkeit einer durch Spannungen bedingte Rissbildung in der Vorrichtung vermindert. Somit könnten die Abstände der Wartungsintervalle bei Verwendung einer solchen Vorrichtung im Vergleich zu bekannten Vorrichtungen vergrößert werden.

Die erfindungsgemäße Vorrichtung kann durch Wahl geeigneter Materialien optimiert werden. So ist vorzugsweise vorgesehen, dass das Achsrohr aus einer Aluminiumlegierung gegossen ist, vorzugsweise aus einer Aluminiumlegierung, die die mechanischen Anforderungen des Bauteils erfüllt. Bei einer bevorzugten Ausführungsform ist das Achsrohr aus AC-AlSi7Mg0,3 oder AC-AICu4Ti hergestellt. Diese Legierungen eignen sich besonders für ein Gießverfahren, über welches vorzugsweise das Achsrohr hergestellt wird. Dabei soll vorzugsweise der Gießzustand bzw. Werkstoffzustand der Legierung ST6 entsprechen. Aluminiumlegierungen haben zusätzlich den Vorteil, dass sie im Vergleich zu anderen Metallen oder Metallverbindungen ein geringeres Eigengewicht haben und erhebliche Gewichtseinsparungen möglich werden. Ein Bauteil aus einer Aluminiumlegierung ist vergleichsweise leicht. Verbaut in einem Schienenfahrzeug sind leichte Bauteile für die Energieeffizienz des Fahrzeuges vorteilhaft.

Die Mittelachse ist vorzugsweise aus Aluminium gegossen. Bei einer bevorzugten Ausführungsform ist der Dorn mit Achslager und Radflansch außen aus Stahl oder einem alternativen berechneten leichteren Werkstoff gegossen. Vorzugsweise ist die Radhalterung einstückig ausgebildet und entsprechend sind auch Radlager und zweiter Radflansch aus dem gleichen Werkstoff hergestellt.

Bei einer bevorzugten Ausführungsform erstreckt sich die Mittelachse in Längsrichtung in dem Radlager der Radhalterung. Radlager und Radhalterung sind entsprechend so ausgebildet, dass sie in einem Radsatzlager gelagert werden können. Vorzugsweise weist die Mittelachse in einem Endabschnitt einen größeren Durchmesser als in ihrem Hauptabschnitt auf. Der Endabschnitt mit größerem Durchmesser ist vorzugsweise der Bereich, der im Inneren den Dorn der Radlagerung aufnimmt.

Da das Befestigungselement, vorzugsweise als Eingießteil aus Stahl, mit der Mittelachse fest verbunden ist, ist es bei Belastung des Rades hohen Kräften ausgesetzt. Damit das Befestigungselement diese Kräfte auf das Achsrohr übertragen kann, ist es vorteilhaft, wenn das Befestigungselement stabil mit dem Achsrohr verbunden ist. Daher ist bei einer bevorzugten Ausführungsform vorgesehen, dass in das Befestigungselement wenigstens eine Nut eingebracht ist, in die ein an der Innenwand des Achsrohrs gegossener Zapfen eingreift. Vorteilhafterweise ist an der dem Zapfen entgegengesetzt liegenden Innenwand des Achsrohrs ein weiterer Zapfen ausgebildet, der in eine der ersten Nut entgegengesetzt angeordnete weitere Nut am Befestigungselement eingreift. Da das Befestigungselement als Eingießteil vorzugsweise rundförmig ausgeführt ist, ist die Wanddicke um das Befestigungselement bevorzugt ausgewogen und gleichmäßig. Üblicherweise schrumpft das Material des Achsrohrs beim Gießprozess auf das Befestigungselement auf.

Es ist vorteilhaft, wenn der sich entgegen der Längsrichtung verjüngende Dorn passungsgerecht an den Innenwänden des Hohlrohrs anliegt. Bei einer bevorzugten Ausführungsform ist vorgesehen, dass die Wanddicken des Achsrohrs im Bereich des Endabschnitts mit erstem Radflansch den höheren Belastungen angepasst und größer als im Hauptabschnitt des Achsrohrs sind. Das Variieren der Wandstärke kann aber auch berechnungsbedingt in anderen Abschnitten des Achsrohrs sinnvoll sein, um beispielsweise besonders belastete Abschnitte des Achsrohrs durch eine verstärkte Wandstärke stabiler auszubilden, oder um weitere Material- und Gewichtseinsparungen zu realisieren.

Um die Stabilität des Achsrohrs zu optimieren, können in einer bevorzugten Ausführungsform im Achsrohr zumindest abschnittsweise Verrippungen angeordnet sein.

Um den ersten Radflansch gegenüber Krafteinwirkungen in oder gegen Längsrichtung stabiler zu gestalten, ist bei einer bevorzugten Ausführungsform vorgesehen, dass an der Außenseite des Achsrohrs zwischen dem in Längsrichtung verlaufenden Achsrohr und dem vertikal zur Längsrichtung sich erstreckenden ersten Radflansch berechnungsbedingt Stützrippen angeordnet sind.

Erfindungsgemäß ist auch eine Radsatzwelle für Schienenfahrzeuge beansprucht, umfassend eine erste erfindungsgemäße Vorrichtung und spiegelbildlich eine zur Längsrichtung der ersten Vorrichtung entgegengesetzt angeordnete zweite erfindungsgemäße Vorrichtung, wobei das Achsrohr der ersten Vorrichtung ein erster Endabschnitt einer Welle und das Achsrohr der zweiten Vorrichtung ein einem ersten Endabschnitt entgegengesetzt liegender zweiter Endabschnitt der Welle ist. Die erfindungsgemäße Radsatzwelle ist einstückig und weist alle Vorteile auf, die in Bezug auf die Vorrichtung bereits oben erläutert wurden. Die erfindungsgemäße Radsatzwelle ist geeignet, in üblichen Radsatzlagern eines Laufwerks eines Schienenfahrzeugs montiert zu werden. Auf der erfindungsgemäßen Radsatzwelle können auch Bremsscheiben und Antriebszahnräder montiert werden, was bereits beim Gießprozess berücksichtigt werden kann.

### Wege zur Ausführung der Erfindung und gewerbliche Verwertbarkeit:

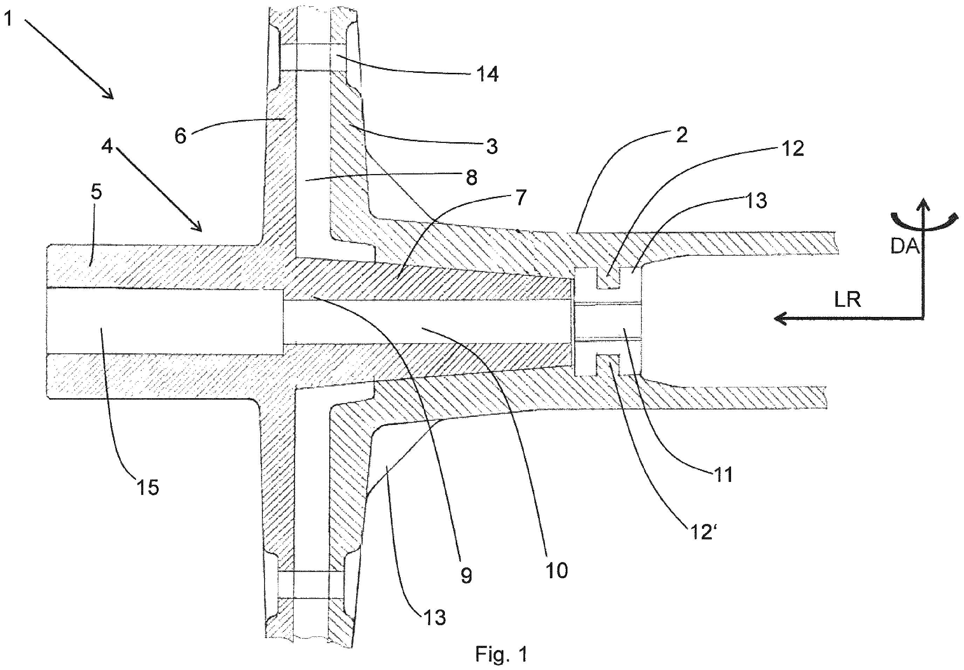

Eine bevorzugte Ausführungsform der Erfindung wird anhand der beigefügten Figur 1 erläutert. Diese zeigt einen Teil der erfindungsgemäßen Radsatzwelle für Schienenfahrzeuge im Querschnitt. Der gezeigte Teil der Radsatzwelle entspricht der erfindungsgemäßen Vorrichtung 1, die vorzugsweise rotationssymmetrisch ausgebildet ist.

Die Vorrichtung 1 umfasst zunächst ein sich in Längsrichtung LR erstreckendes Achsrohr 2. Die Wände des Achsrohrs 2 sind vorzugsweise aus einer Aluminiumgusslegierung gegossen, vorzugsweise aus AlSi7Mg0,3 oder AICu4Ti. Der Gießzustand bzw. Werkstoffzustand entspricht vorzugsweise ST6. Die Herstellung von höheren mechanischen Eigenschaften am Bauteil werden gießtechnologisch unterstützt. Das Achsrohr 2 ist in der gezeigten Ausführungsform in Längsrichtung zunächst innen hohl. Je nach Variante können in dem Achsrohr 2 Verstrebungen angeordnet sein.

Nicht gezeigt ist in Fig. 1, dass das Achsrohr 2 der Vorrichtung 1 entgegengesetzt der Längsrichtung LR sich weiter erstreckt und einen ersten Endabschnitt einer nicht vollständig gezeigten Radsatzwelle bildet. Die Radsatzwelle geht an ihrem entgegengesetzt angeordneten zweiten Endabschnitt in ein Achsrohr einer spiegelbildlich um 180° zu einer Drehachse DA - wobei die Drehachse senkrecht zur Längsrichtung LR orientiert ist - gedrehten zweiten Vorrichtung über. Die zweite Vorrichtung ist demnach ebenfalls Teil der Radsatzwelle. Symmetriebedingt ist sie identisch zu der ersten Vorrichtung 1 aufgebaut, wobei die Längsrichtung der zweiten Vorrichtung - entsprechend der zur ersten Vorrichtung 1 gedrehten Orientierung der zweiten Vorrichtung 1 - entgegengesetzt zur Längsrichtung LR der ersten Vorrichtung 1 spiegelbildlich ausgerichtet ist. Die Radsatzwelle mit erster Vorrichtung 1 und zweiter Vorrichtung kann in einem nicht gezeigten Radsatzlager gelagert werden.

Das Achsrohr 2 der Vorrichtung 1 endet in Längsrichtung LR in einem ersten Radflansch 3. Der erste Radflansch 3 ist vorzugsweise tellerartig ausgebildet und mit einem Rad 8, einer Radnabe 9 und einem zweiten Radflansch 6 über eine Schraubverbindung verbunden. Die Radnabe 9 mit angepassten Kragen sitzt auf einem Dorn 7 und ist mit Passung am Ende der Achse aus Aluminium geführt eingebracht. Der erste Radflansch 3 und die Rohrwandung des Achsrohrs 2 sind dabei so ausgebildet, dass die Lasten vom Bauteil optimal aufgenommen werden können. Gegenüber der Radnabe 9 wird mit dem Rad 8 der Radflansch 6 fest verschraubt. Verschleißarme Werkstoffe können dort zur Reduzierung des Lärms und der Stöße eingesetzt werden.

Dem ersten Radflansch 3 gegenüberliegend ist ein zweiter Radflansch 6 mit einem Radlager und Konus (Dorn) angeordnet. Der zweite Radflansch 6 ist vorzugsweise ebenfalls tellerartig ausgebildet und auf der dem ersten Radflansch 3 entgegengesetzt liegenden Seite des Rades 8 am Rad 8 angeflanscht. Über mehrere berechnungsgerechte Schrauben 14, die sich durch den ersten Radflansch 6, das Rad 8 und den zweiten Radflansch 3 erstrecken, sind der zweite Radflansch 6, das Rad 8 und der erste Radflansch 3 fest miteinander verbunden. Es versteht sich, dass vom Erfindungsgedanken auch andere bekannte wieder lösbare Verbindungsmittel anstelle einer Schraube 14 verwendet werden können. Die Radhalterung 4 umfasst neben dem zweiten Radflansch 6 einen Radlager 5 und einen Dorn 7. Vorzugsweise ist die Radhalterung 4 einstückig ausgebildet. Die Radhalterung 4 ist aus Stahl oder anderen den mechanischen Anforderungen entsprechenden Werkstoffen als Gussteil hergestellt.

Der Dorn 7 der Radhalterung 4 ist als Konus ausgebildet und in Höhe der Radnabe 9 des Rades 8 angeordnet. Er erstreckt sich entgegengesetzt der Längsrichtung LR durch die Radnabe 9 des Rades 8 in einen Innenraum des Achsrohrs 2 hinein. Er ist dabei formschlüssig mit der Radnabe 9 des Rades 8 verbunden. Im Innenraum des Achsrohrs 2 liegt er an den Innenwänden des Achsrohrs 2 an. Daher variiert zumindest im Bereich des Dorns 7 die Materialstärke der Wände des Achsrohrs 2 so, dass der Durchmesser des Innenraums des Achsrohrs 2 sich dem Durchmesser des sich verjüngenden Dorns 7 entsprechend anpasst. Der Dorn 7 endet mit Toleranz an einem im Inneren des Achsrohrs 2 eingegossenen Befestigungselement 11, auf welches weiter unten eingegangen wird.

Die Radhalterung 4 ist mit einer Bohrung versehen, die der festen Verbindung, vorzugsweise Verschraubung, der Radhalterung 4 mit dem Eingießteil 11 als Befestigungselement dient. Die Verschraubung ist dabei mit einer federnden Unterlegscheibe durchgeführt, um die verschiedenen Ausdehnungskoeffizienten bei Temperaturveränderungen auszugleichen (nicht dargestellt). Ferner sind an den Außenseiten des Achsrohres 2 zwischen dem in Längsrichtung LR verlaufenden Achsrohr 2 und dem sich vertikal zur Längsrichtung LR erstreckenden ersten Radflansch 3 Stützrippen angeordnet. Diese dienen der Stabilisierung gegenüber Lasten und Kräften, die in Längsrichtung und Querrichtung auf die ersten und zweiten Radflansche 3, 6 mit dazwischen anordenbarem Rad 8 wirken. Die Lage und Größe der optionalen Stützrippen sind berechnungs- und bauraumbedingt anzuordnen und auszulegen.

Das Rad 8 ist ein Drehteil aus Stahl und kann separat aus normalem Rundstahl hergestellt werden. Das mittig angeordnete Achsrohr 2 mit beidseitigen Radflanschen 3, 6 nimmt die Räder 8 beidseitig auf, wobei die Räder 8 über dem als Konus ausgeführten Dorn 7 mit den Radlagern 5 und den Radflanschen 3, 6 mit dem Achsrohr 2 verschraubt sind.

## Patentansprüche

1. Vorrichtung (1) für Schienenfahrzeuge, umfassend :
- ein sich entlang einer Längsrichtung (LR) erstreckendes, überwiegend hohles Achsrohr (2), das in einem ersten Radflansch (3) endet;
- eine sich entgegengesetzt der Längsrichtung (LR) erstreckende Radhalterung (4), umfassend ein Radlager (5), einen zweiten Radflansch (6) und einen Dorn (7) als Konus, wobei der zweite Radflansch (6), der erste Radflansch (3) und ein dazwischen angeordnetes Rad (8) mit einer Radnabe (9) über eine Flanschverbindung miteinander verbunden sind, **dadurch gekennzeichnet, dass** sich der Dorn (7) von der Radhalterung (4) als Konus formschlüssig entgegengesetzt der Längsrichtung (LR) durch die Radnabe (9) des Rades (8) in den Innenraum des Achsrohrs (2) einfügt und in einem im Achsrohr (2) angeordneten und eingegossenen Befestigungselement (11) endet und mit diesem verbunden ist.

2. Vorrichtung (1) nach Anspruch 1, **dadurch gekennzeichnet, dass** das Achsrohr (2) aus einer Aluminiumlegierung gegossen ist.

3. Vorrichtung (1) nach einem der vorhergehenden Ansprüche, **dadurch gekennzeichnet, dass** das Achsrohr (2) aus AC-AlSi7Mg0,3 oder AC-AlCu4Ti gegossen ist.

4. Vorrichtung (1) nach einem der vorhergehenden Ansprüche, **dadurch gekennzeichnet, dass** die Verbindung zwischen Dorn (7) und dem Befestigungselement (11) durch eine Verschraubung erfolgt.

5. Vorrichtung (1) nach einem der vorhergehenden Ansprüche, **dadurch gekennzeichnet, dass** der Dorn (7) aus Stahl oder einem anderen Werkstoff gegossen ist, der ähnliche mechanische Anforderungen erfüllt.

6. Vorrichtung (1) nach einem der vorhergehenden Ansprüche, **dadurch gekennzeichnet, dass** das Befestigungselement (11) als rotationssymmetrisches Drehteil aus Stahl ausgebildet ist, welches mit Einschnürungen versehen in das Achsrohr 2 eingegossen und eingeschrumpft ist.

7. Vorrichtung (1) nach einem der vorhergehenden Ansprüche, **dadurch gekennzeichnet, dass** die Wandstärke des Achsrohrs (2) dem optimalen Verlauf der Spannungen durch Lasten und Kräfte und den Bedingungen des Bauraumes angepasst ist.

8. Vorrichtung (1) nach einem der vorhergehenden Ansprüche, **dadurch gekennzeichnet, dass** das Achsrohr (2) Eingießteile als Befestigungselemente (11) aus Stahl umfasst.

9. Vorrichtung (1) nach einem der vorhergehenden Ansprüche, **dadurch gekennzeichnet, dass** in dem Achsrohr (2) zumindest abschnittsweise Verrippungen zur Stabilisierung angebracht sind.

10. Vorrichtung (1) nach einem der vorhergehenden Ansprüche, **dadurch gekennzeichnet, dass** an den Außenseiten des Achsrohres (2) zwischen dem in Längsrichtung (LR) verlaufenden Achsrohr (2) und dem vertikal zur Längsrichtung (LR) sich erstreckenden ersten Radflansch (3) Stützrippen angeordnet sind.

11. Vorrichtung (1) nach einem der vorhergehenden Ansprüche, **dadurch gekennzeichnet, dass** im Achsrohr (2) abschnittsweise Verrippungen angeordnet sind.

12. Radsatzwelle für Schienenfahrzeuge, umfassend eine erste Vorrichtung (1) nach einem der Ansprüche 1 bis 11 und eine zur Längsrichtung (LR) der ersten Vorrichtung (1) spiegelbildlich angeordnete zweite Vorrichtung nach einem der Ansprüche 1 bis 10, wobei das Achsrohr (2) der ersten Vorrichtung (1) ein erster Endabschnitt einer Welle und das Achsrohr der zweiten Vorrichtung ein dem ersten Endabschnitt entgegengesetzt liegender zweiter Endabschnitt der Welle ist.

13. Radsatzwelle nach Anspruch 12, **dadurch gekennzeichnet, dass** das mittig angeordnete Achsrohr (2) mit beidseitigen Radflanschen (3, 6) die Räder (8) beidseitig aufnimmt, wobei die Räder (8) über einen als Konus ausgeführten Dorn (7) mit Radlagern (5) und Radflanschen (3, 6) mit dem Achsrohr (2) verschraubt sind.

## Claims

1. A device (1) for rail vehicles comprising:
- a predominantly hollow axle tube (2) extending along a longitudinal direction (LR) and ending in a first wheel flange (3);
- a wheel support (4) extending opposite to the longitudinal direction (LR), comprising a wheel bearing (5), a second wheel flange (6) and a mandrel (7) as a cone,
wherein the second wheel flange (6), the first wheel flange (3) and a wheel (8) arranged therebetween with a wheel hub (9) are connected to each other via a flange connection, **characterized in that** the mandrel (7) as a cone is inserted from the wheel support (4) in a positive-locking manner opposite to the longitudinal direction (LR) through the wheel hub (9) of the wheel (8) into the interior of the axle tube (2) and ends in a fastening element (11), which is arranged and cast into the axle tube (2), and is connected thereto.

2. The device (1) according to claim 1, **characterized in that** the axle tube (2) is cast from an aluminum alloy.

3. The device (1) according to any of the preceding claims, **characterized in that** the axle tube (2) is cast from AC-AlSi7Mg0.3 or AC-AICu4Ti.

4. The device (1) according to any one of the preceding claims, **characterized in that** the connection between the mandrel (7) and the fastening element (11) is made by a screw connection.

5. The device (1) according to any one of the preceding claims, **characterized in that** the mandrel (7) is cast from steel or another material which meets similar mechanical requirements.

6. The device (1) according to any one of the preceding claims, **characterized in that** the fastening element (11) is constructed as a rotation-symmetric rotary component made of steel, which is provided with constrictions and which is cast and shrink-fitted into the axle tube (2).

7. The device (1) according to any one of the preceding claims, **characterized in that** the wall thickness of the axle tube (2) is adapted to the optimum distribution of the stresses due to loads and forces and to the conditions of the installation space.

8. The device (1) according to any one of the preceding claims, **characterized in that** the axle tube (2) comprises cast parts as fastening elements (11) made of steel.

9. The device (1) according to any one of the preceding claims, **characterized in that** ribbings for stabilization are provided within the axle tube (2) at least in sections.

10. The device (1) according to any one of the preceding claims, **characterized in that** between the axle tube (2) extending in the longitudinal direction (LR) and the first wheel flange (3) extending perpendicular to the longitudinal direction (LR) support ribs are arranged on the outside of the axle tube (2).

11. The device (1) according to any one of the preceding claims, **characterized in that** ribbings are arranged in sections within the axle tube (2).

12. A wheelset axle for rail vehicles, comprising a first device (1) according to any one of claims 1 to 11 and a second device according to any one of claims 1 to 10, which is arranged in mirror image to the longitudinal direction (LR) of the first device (1), wherein the axle tube (2) of the first device (1) is a first end section of an axle and the axle tube of the second device is a second end section of the axle opposite to the first end section.

13. The wheelset axle according to claim 12, **characterized in that** the centrally arranged axle tube (2) with wheel flanges (3, 6) on both sides receives the wheels (8) on both sides, wherein the wheels (8) are screwed to the axle tube (2) via a mandrel (7) formed as a cone with wheel bearings (5) and wheel flanges (3, 6).

## Revendications

1. Dispositif (1) destiné à des véhicules ferroviaires, comprenant :
- une tubulure d'essieu (2) majoritairement creuse, s'étendant le long d'une direction longitudinale (LR) et s'achevant dans un premier flasque (3) de roue ;
- un support (4) de roue qui s'étend en sens inverse de la direction longitudinale (LR) et inclut un roulement (5) de roue, un second flasque (6) de roue et un mandrin (7) de configuration tronconique, ledit second flasque (6) de roue, ledit premier flasque (3) de roue, et une roue (8) pourvue d'un moyeu (9) et interposée entre ces derniers, étant reliés mutuellement par l'intermédiaire d'une liaison bridée, **caractérisé par le fait que** le mandrin (7), de configuration tronconique, vient s'insérer par complémentarité de formes dans l'espace interne de la tubulure d'essieu (2), en sens inverse de la direction longitudinale (LR) à partir du support (4) de roue, en parcourant le moyeu (9) de ladite roue (8), et s'achève dans un élément de fixation (11) logé avec intégration par coulée dans ladite tubulure d'essieu (2), élément auquel il est relié.

2. Dispositif (1) selon la revendication 1, **caractérisé par le fait que** la tubulure d'essieu (2) est venue de coulée en un alliage d'aluminium.

3. Dispositif (1) selon l'une des revendications précédentes, **caractérisé par le fait que** la tubulure d'essieu (2) est venue de coulée en AC-AlSi7Mg0,3 ou en AC-AlCu4Ti.

4. Dispositif (1) selon l'une des revendications précédentes, **caractérisé par le fait que** la liaison entre le mandrin (7) et l'élément de fixation (11) est instaurée par un vissage.

5. Dispositif (1) selon l'une des revendications précédentes, **caractérisé par le fait que** le mandrin (7) est venu de coulée en acier, ou en un matériau autre satisfaisant à des exigences mécaniques similaires.

6. Dispositif (1) selon l'une des revendications précédentes, **caractérisé par le fait que** l'élément de fixation (11) est réalisé sous la forme d'une pièce tournée en acier à symétrie de rotation qui, pourvue de zones resserrées, est intégrée par coulée et emmanchée à force dans la tubulure d'essieu (2).

7. Dispositif (1) selon l'une des revendications précédentes, **caractérisé par le fait que** l'épaisseur de paroi de la tubulure d'essieu (2) est adaptée au profil optimal des contraintes provoquées par des charges et par des forces, et aux conditions de l'espace d'installation.

8. Dispositif (1) selon l'une des revendications précédentes, **caractérisé par le fait que** la tubulure d'essieu (2) inclut des pièces intégrées par coulée, en tant qu'éléments de fixation (11) en acier.

9. Dispositif (1) selon l'une des revendications précédentes, **caractérisé par le fait que** des nervurages sont façonnés dans la tubulure d'essieu (2), au moins par tronçons, en vue de la stabilisation.

10. Dispositif (1) selon l'une des revendications précédentes, **caractérisé par le fait que** des nervures d'appui sont agencées au niveau des faces extérieures de la tubulure d'essieu (2), entre ladite tubulure d'essieu (2) s'étendant dans la direction longitudinale (LR) et le premier flasque (3) de roue s'étendant verticalement par rapport à ladite direction longitudinale (LR).

11. Dispositif (1) selon l'une des revendications précédentes, **caractérisé par le fait que** des nervurages sont agencés par tronçons dans la tubulure d'essieu (2).

12. Arbre d'essieu dévolu à des véhicules ferroviaires, comprenant un premier dispositif (1) conforme à l'une des revendications 1 à 11 et un second dispositif conforme à l'une des revendications 1 à 10, agencé avec symétrie spéculaire par rapport à la direction longitudinale (LR) dudit premier dispositif (1), la tubulure d'essieu (2) du premier dispositif (1) étant une première région extrême d'un arbre, et la tubulure d'essieu du second dispositif étant une seconde région extrême dudit arbre qui est située à l'opposé de ladite première région extrême.

13. Arbre d'essieu selon la revendication 12, **caractérisé par le fait que** la tubulure d'essieu (2), disposée centralement, reçoit les roues (8) de part et d'autre par des flasques (3, 6) de roues implantés des deux côtés, lesdites roues (8) étant assemblées par vissage avec ladite tubulure d'essieu (2) par l'intermédiaire d'un mandrin (7) de réalisation tronconique, avec des roulements (5) de roues et des flasques (3, 6) de roues.
